# EUROPÄISCHE PATENTSCHRIFT

(11) **EP 1 369 262 B1**
(45) Veröffentlichungstag und Bekanntmachung des Hinweises auf die Patenterteilung: **20.08.2008**
(21) Anmeldenummer: 03008776.1
(22) Anmeldetag: 22.04.2003
(51) Int. Cl.: B29C 59/00, B29C 59/04, B44B 5/00, B41C 1/18, B41C 3/00

(54) **Prägezylinder für die Herstellung von Prägefolien**
Stamping cylinder for manufacturing stamping foils
Cylindre d'estampage pour la production des feuilles d'estampage

(30) Priorität: 07.06.2002 DE 10225615
(43) Veröffentlichungstag der Anmeldung: 10.12.2003
(73) Patentinhaber: Giesecke & Devrient GmbH, 81677 München (DE)
(72) Erfinder: Radler, Andreas, 85649 Hofolding (DE)
(74) Vertreter: Klunker . Schmitt-Nilson . Hirsch

(56) Entgegenhaltungen:
- DE-A1- 3 932 198
- DE-A1- 10 049 283
- DE-A1- 19 627 638
- US-A- 4 478 769

## Beschreibung

Die Erfindung betrifft ein Verfahren zum Herstellen einer nahtlosen zylindrischen Form, die Beugungsstrukturen in Form einer Reliefstruktur aufweist.

Hologramme, Kinegramme® oder ähnliche auf Beugungseffekten beruhende Elemente stellen aufgrund ihres mit Änderung des Betrachtungswinkels auftretenden Farbwechselspiels sowie der Möglichkeit, betrachtungswinkelabhängig lesbare Informationen zu erzeugen, ein beliebtes Echtheitsmerkmal dar, da dieser so genannte "optisch variable Effekt" praktisch nicht durch einfache Mittel imitiert werden kann. Sie bieten ferner einen sehr guten Schutz gegen Fälschungen mittels Farbkopierern. Denn das Kopiergerät kann nur die unter einem bestimmten Betrachtungswinkel erkennbare Information und Farbe des Hologramms wiedergeben, der optisch variable Effekt dagegen geht verloren.

Üblicherweise werden die in der Sicherungstechnik verwendeten Hologramme als Prägehologramme hergestellt, d.h., die in den Beugungsstrukturen gespeicherte holografische Information wird in eine Reliefstruktur umgesetzt. Hierbei erfolgt die holografische Aufnahme in eine Foto-Resist-Platte, die nach der Entwicklung die gewünschte Reliefstruktur aufweist. Diese Reliefstruktur wird galvanisch in eine Nickelfolie abgeformt, das so genannte "Master-Shim". Von diesem Master-Shim werden ebenfalls galvanisch Tochter-Shims in Form von Nickelfolien abgeformt. Die einzelnen plattenförmigen Tochter-Shims dienen als Prägeform. Einzelne oder mehrere dieser Prägeformen werden auf einen Spannzylinder aufgeklebt oder aufgespannt, um ein kontinuierliches Prägen einer Hologramm-Prägefolie zu ermöglichen. Dieses Verfahren wird beispielsweise in der EP 0 338 378 A1 näher beschrieben.

Bei einem etwas abgewandelten Verfahren werden die ersten abgeformten Nickelfolien zum Prägen einer großen Anzahl von Nutzen in eine thermoplastische Kunststoffplatte, z.B. Plexiglas, benutzt. Diese Kunststoffplatte wird anschließend galvanisch abgeformt und die abgeformte Metallschicht in Form einer großen Prägeform, welche viele Nutzen des ursprünglichen Shims aufweist, auf dem Spannzylinder befestigt.

Da die nach dem beschriebenen Verfahren hergestellten Prägeformen planare Metallfolien sind, werden sie an ihren Stoßkanten verschweißt, um daraus zylindrische Prägeformen - so genannte "Prägesleeves" - zu bilden, die auf Spannzylinder aufgespannt werden können, um fertige Prägezylinder herzustellen.

Die Schweißnahtbreite der Prägesleeves beträgt etwa 0,35 - 0,4 mm, verursacht aber wegen der Unebenheiten der Schweißnaht beim Prägen der Folien einen Folienzuwachs im Nahtbereich von bis zu 1 mm. Prägesleeves, die einen größeren Nahtzuwachs hervorrufen, sind nicht verwendbar. Die geprägte Hologrammfolie weist somit in den Bereichen, in welchen die einzelnen Prägeformen auf dem Spannzylinder aneinander grenzen, eine störende Trennlinie auf, die unter Umständen als Ausschuss, entfernt werden muss. Bei der Herstellung von Endlosprodukten jedoch, wie z.B. Sicherheitsfäden, bleibt die störende Trennlinie erhalten.

Um diesen Nachteil zu umgehen, wurde auch bereits vorgeschlagen, den Foto-Resist für die holografische Belichtung auf einem Zylinder vorzusehen und in einem so genannten "step-repeat-Vorschubverfahren" in gewissen Abständen wiederholt mit derselben holografischen Information zu belichten. Der entwickelte Zylinder wird anschließend in eine Gummiform und diese wiederum in ein beständiges keramisches Material auf einen Stahlkern abgeformt, welches den Prägezylinder darstellt ("Holography News", Vol. 8, Sept. 1994, Seiten 1 und 7).

Die zuletzt beschriebene Vorgehensweise zur Herstellung eines Hologramm-Prägezylinders ist allerdings sehr aufwändig, da bereits die Belichtung des gesamten Foto-Resist-Zylinders mehrere Tage in Anspruch nimmt. Zudem können bei der wiederholten Belichtung Fehler auftreten, die unter Umständen den gesamten Zylinder unbrauchbar machen. Auch die Abformvorgänge erfordern einen hohen Aufwand.

In der WO 98/01278 wird daher ein anderes Verfahren zum Herstellen einer nahtlosen zylindrischen Prägeform vorgeschlagen, bei welchem ein mit thermoplastischem Material ausgekleideter Hohlzylinder auf seiner Zylindermantelinnenseite mit einem Master-Shim-Prägestempel geprägt wird. Auf der geprägten Innenseite des Hohlzylinders wird anschließend in einem Galvanisierungsvorgang eine stabile, selbsttragende Nickelfolie erzeugt. Diese Nickelfolie wird anschließend aus dem Hohlzylinder herausgelöst und unmittelbar als (nahtlose) Prägeform auf einem Spannzylinder befestigt.

Problematisch bei diesem Verfahren stellt sich dar, dass die Prägeflächen der Master-Shim-Prägestempel eine definierte Krümmung besitzen, mit der nur Hohlzylinder eines ganz bestimmten Innendurchmessers geprägt werden können. Auch das Prägen innerhalb des Hohlzylinders erfordert einen hohen apparativen Aufwand.

Der Erfindung liegt nun die Aufgabe zugrunde, ein einfaches und zuverlässiges Verfahren zum Herstellen einer solchen nahtlosen zylindrischen Form anzugeben.

Diese Aufgabe wird durch ein Verfahren mit den Merkmalen des Hauptanspruchs gelöst. In davon abhängigen Ansprüchen sind vorteilhafte Ausgestaltungen und Weiterbildungen der Erfindung angegeben.

Demnach wird zunächst eine in üblicher Weise erzeugte Master-Shim-Metallfolie mit Beugungsstrukturen in Form einer Reliefstruktur bereitgestellt. Anstatt aber die Stoßkanten der Masterfolie miteinander zu verschweißen, wird die Masterfolie mit nach innen weisender Reliefoberfläche in einen geschlitzten Hohlzylinder eingebracht. Aufgrund des Schlitzes im Hohlzylinder ist es nun möglich, den Zylinderumfang zu variieren und so weit zu reduzieren, dass die eingebrachte Masterfolie mit ihren Stoßkanten exakt aneinander stößt. In diesem Zustand wird die Reliefoberfläche abgeformt, indem beispielsweise in einem Galvanikverfahren ein Metall, vorzugsweise Nickel, auf der Reliefoberfläche abgeschieden wird. Das an die Masterfolie während des Abformprozesses angrenzende Material überbrückt die Stoßlinie, und es bildet sich eine nahtlose, zylindrische Form aus.

Nach Abschluss des Abformprozesses wird die Masterfolie einschließlich der von ihr umschlossenen zylindrischen Form aus dem Hohlzylinder herausgeschoben. Von den Stoßkanten der Masterfolie aus lässt sich die Masterfolie von der Form abschälen.

Erfolgt der Abformprozess auf galvanischem Weg, so wächst die Form als selbsttragende, nahtlose Metallschicht mit konstanter Schichtdicke auf der Hohlzylinderinnenwand auf. Diese Schicht stellt bereits den fertigen Prägesleeve dar, der anschließend auf einen Spannzylinder zur Herstellung des endgültigen Prägezylinders aufgezogen werden kann.

Nachfolgend wird die Erfindung anhand der begleitenden Zeichnungen beispielhaft erläutert. Darin zeigen:
- Figur 1: eine Masterfolie mit Beugungsstrukturen in Form von Reliefstrukturen einerseits in Aufsicht und andererseits im Moment des Einschiebens in einen geschlitzten Hohlzylinder,
- Figur 2: den im Umfang reduzierten, geschlitzten Hohlzylinder mit aneinander anstoßenden Stoßkanten der darin eingeschobenen Masterfolie,
- Figur 3: den Hohlzylinder aus Figur 2 während des Galvanisierungsprozesses,
- Figur 4: das Herausschieben der Masterfolie mit aufgewachsenem Prägesleeve aus dem Hohlzylinder,
- Figur 5: das Abschälen des Prägesleeves von der Masterfolie und
- Figur 6: den auf einen Spannzylinder aufgezogenen Prägesleeve.

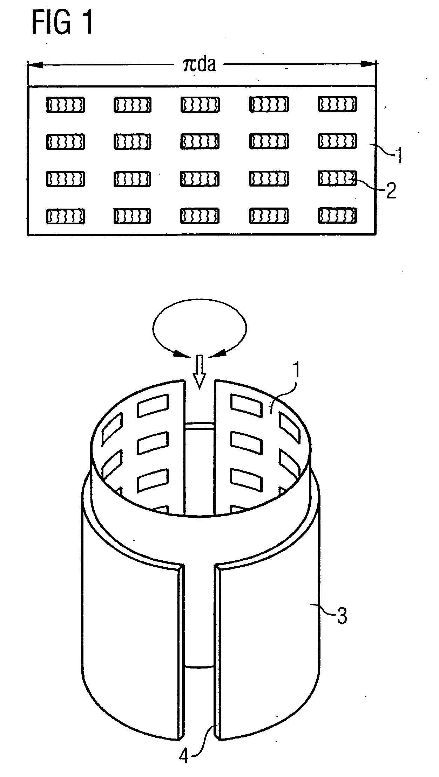

Figur 1 zeigt im oberen Bildteil eine metallisierte Masterfolie 1, die in Bereichen 2 mit reliefartigen Beugungsstrukturen ausgestattet ist. Bei der Masterfolie bzw. dem "Master-Shim" handelt es sich um einen in üblicher Weise im Galvanikprozess hergestellten Nickelmaster, der mittels eines Lasers exakt auf das Zylinderumfangsmaß des damit herzustellenden Prägezylinders geschnitten worden ist. Dieses Maß ist mit πdₐ angegeben.

Die Masterfolie 1 wird nun gerollt und in einen Hohlzylinder 3 derart eingeschoben, dass die reliefartigen Beugungsstrukturen ins Hohlzylinderinnere weisen. Der Hohlzylinder 3 ist entlang seiner Längsachse durchgängig geschlitzt. Dadurch ist der Umfang des Hohlzylinders 3 durch Verändern der Breite des Schlitzes 4 variierbar.

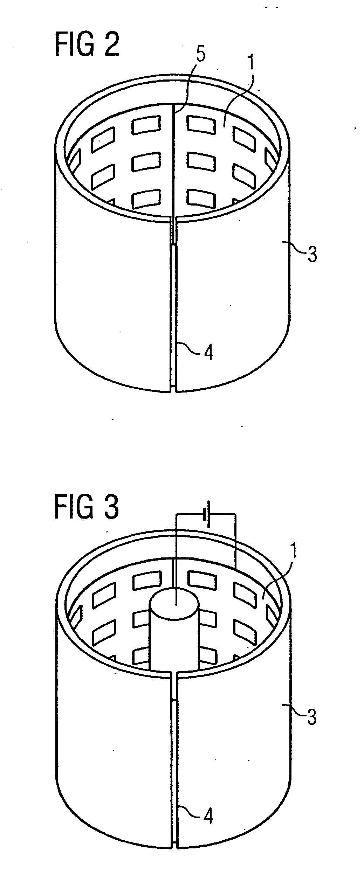

Nachdem nun die Masterfolie 1 vollständig in den geschlitzten Hohlzylinder 3 eingeschoben worden ist, wird die Breite des Schlitzes 4 verringert, bis die zueinander benachbart liegenden Seitenkanten 5 der Masterfolie 1 exakt aneinander anstoßen (Figur 2). Zum Spannen des Hohlzylinders 3 dienen (nicht dargestellte) Spannschrauben, die nahe den axialen Enden des Hohlzylinders in den Schlitz 4 überbrückender Weise außen auf den Hohlzylinder 3 aufgeschweißt sind.

Anschließend wird die in den Hohlzylinder 3 eingebrachte Masterfolie 1 vorzugsweise speziell vorbehandelt, beispielsweise mit einem Trennmittel, um zu erreichen, dass die Masterfolie 1 nach dem anschließenden Abformvorgang von dem Abformungsprodukt wieder abgelöst werden kann. Diese Release-Behandlung der Masterfolie kann aber auch bereits zu einem früheren Zeitpunkt erfolgen.

Die Abformung kann auf verschiedene Weise erfolgen, beispielsweise durch Ausgießen des Hohlzylinders mit einem Kunststoff und anschließendem Metallisieren des so hergestellten Kunststoffzylinders oder unmittelbar auf galvanischem Wege. Bevorzugt ist ein galvanischer Abformungsprozess, wie er in Figur 3 dargestellt ist. Durch Metallabscheidung, vorzugsweise Nikkelabscheidung, wird eine selbsttragende, stabile Metallfolie aufgebaut, die auf ihrer äußeren Mantelfläche die Reliefstruktur trägt und die daher direkt als Prägeform verwendbar ist. Durch das Aufwachsen der Metallpartikel auf der Masterfolie 1 wird der Stoßspalt der Seitenkanten 5 überbrückt, so dass die entstehende metallische Beschichtung im Gegensatz zur Masterfolie 1 selbst keine Naht besitzt.

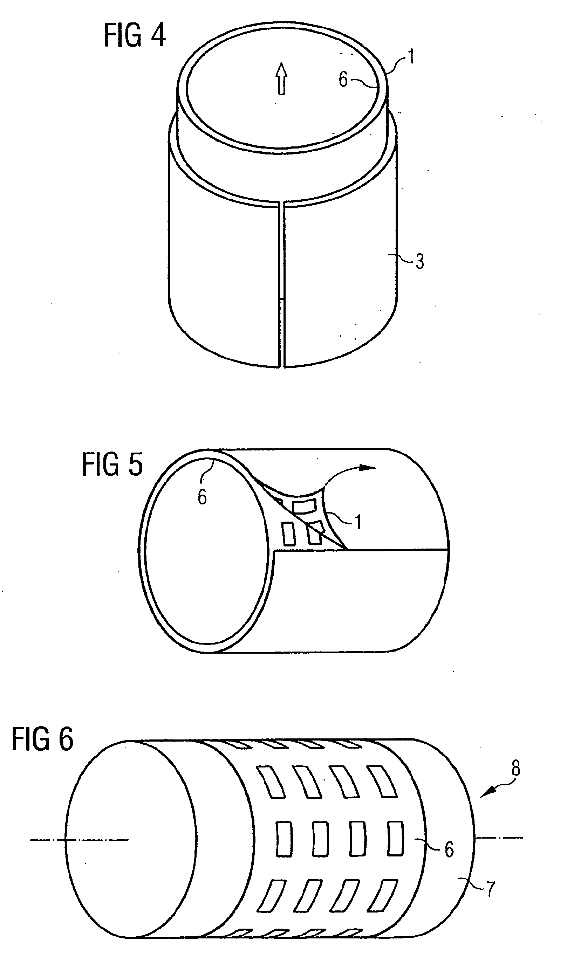

Die nahtlose Schicht bildet den "Prägesleeve" 6. Sie wird, wie in Figur 4 dargestellt, nach Beendigung des Abformprozesses zusammen mit der Masterfolie 1 aus dem Hohlzylinder 3 herausgeschoben.

Aufgrund der Vorbehandlung der Masterfolie 1 ist es nun möglich, die Masterfolie 1 von dem nahtfreien Prägesleeve 6 abzuschälen, wie in Figur 5 dargestellt ist. Der allein zurückbleibende, selbsttragende Prägesleeve 6 kann anschließend auf einen Spannzylinder 7 aufgezogen werden, um einen fertigen Prägezylinder 8 zu bilden (Figur 6). In der WO 98/01278 sind Möglichkeiten angegeben, wie der Prägesleeve 6 auf einen Spannzylinder 7 aufgezogen werden kann.

## Patentansprüche

1. Verfahren zum Herstellen einer nahtlosen zylindrischen Form, die Beugungsstrukturen in Form einer Reliefstruktur aufweist, umfassend die Schritte:
- Bereitstellen einer Masterfolie (1), die reliefartige Beugungsstrukturen (2) auf einer Oberfläche besitzt,
- Einbringen der Masterfolie in einen in Längsachsenrichtung geschlitzten Hohlzylinder (3) derart, dass die Oberfläche mit den reliefartigen Beugungsstrukturen zum Hohlzylinderinneren weist und dass zwei entfernte Seitenkanten (5) der Masterfolie (1) zueinander benachbart liegen,
- Reduzieren der Weite des Schlitzes (4) des Hohlzylinders (3), bis die beiden Seitenkanten (5) der Masterfolie (1) aneinanderstoßen,
- Abformen der Oberfläche derart, dass eine selbsttragende nahtlose Form (6) mit Beugungsstrukturen entsteht, und
- Lösen der Masterfolie (1) von der selbsttragenden Form (6).

2. Verfahren nach Anspruch 1, **dadurch gekennzeichnet, dass** der Schritt des Bereitstellens der Masterfolie (1) durch Zuschneiden der Masterfolie (1) aus einer größeren Folie mittels eines Lasers erfolgt.

3. Verfahren nach Anspruch 1 oder 2, **dadurch gekennzeichnet, dass** der Schritt des Abformens der Oberfläche in einem galvanischen Prozess erfolgt.

4. Verfahren nach Anspruch 3, **dadurch gekennzeichnet, dass** die Form (6) als Prägesleeve auf einen Spannzylinder (7) aufgezogen wird, um einen Prägezylinder (8) zu bilden.

5. Verfahren nach wenigstens einem der Ansprüche 1 bis 4, **dadurch gekennzeichnet, dass** der Schritt des Lösens der Masterfolie (1) von der Form (6) durch Abschälen der Masterfolie (1) von der Form (6) erfolgt.

6. Verfahren nach wenigstens einem der Ansprüche 1 bis 5, **dadurch gekennzeichnet, dass** die Oberfläche der Masterfolie (1) vor dem Schritt des Abformens mit einem Trennmittel versehen wird.

7. Verfahren nach Anspruch 1 oder 2, **dadurch gekennzeichnet, dass** das Abformen in einem Kunststoff erfolgt.

8. Verfahren nach Anspruch 7, **dadurch gekennzeichnet, dass** die Kunststoffform nach dem Lösen von der Masterfolie metallisiert wird.

## Claims

1. A method for producing a seamless cylindrical mold having diffraction structures in the form of a relief structure, comprising the steps of:
- providing a master foil (1) possessing relief diffraction structures (2) on one surface,
- introducing the master foil into a hollow cylinder (3) slotted in the longitudinal axial direction, such that the surface with the relief diffraction structures faces the inside of the hollow cylinder and that two remote side edges (5) of the master foil (1) are mutually adjacent,
- reducing the width of the slot (4) of the hollow cylinder (3) until the two side edges (5) of the master foil (1) abut,
- casting the surface such that a self-supporting seamless mold (6) with diffraction structures arises, and
- detaching the master foil (1) from the self-supporting mold (6).

2. The method according to claim 1, **characterized in that** the step of providing the master foil (1) is effected by cutting the master foil (1) to size from a larger foil by means of a laser.

3. The method according to claim 1 or 2, **characterized in that** the step of casting the surface is effected by a galvanic process.

4. The method according to claim 3, **characterized in that** the mold (6) is mounted as an embossing sleeve on a tensioning cylinder (7) to form an embossing cylinder (8).

5. The method according to at least one of claims 1 to 4, **characterized in that** the step of detaching the master foil (1) from the mold (6) is effected by peeling the master foil (1) off the mold (6).

6. The method according to at least one of claims 1 to 5, **characterized in that** the surface of the master foil (1) is provided with a release agent before the casting step.

7. The method according to claim 1 or 2. **characterized in that** the casting is effected in a plastic.

8. The method according to claim 7, **characterized in that** the plastic mold is metallized after detachment from the master foil.

## Revendications

1. Procédé de fabrication d'une forme cylindrique sans cordon de raccordement, présentant des structures de diffraction ayant la forme d'une structure à relief, comprenant les étapes consistant en:
- la fourniture d'une feuille maître (1) ayant des structures à diffraction (2) du genre à relief, sur une surface,
- l'introduction de la feuille maître dans un cylindre creux (3) fendu en direction de l'axe longitudinal, de manière que la surface ayant les structures à diffraction du type relief soient tournées vers l'intérieur du cylindre creux et que deux arêtes latérales (5) éloignées de la feuille maître (2) soient situées au voisinage l'une de l'autre,
- la réduction de la largeur de la fente (4) du cylindre creux (3), jusqu'à ce que les deux arêtes latérales (5) de la feuille maître (1) viennent se toucher,
- le formage de la surface, de manière à créer une forme (6) sans cordon de raccordement, autoporteuse, ayant des structures à diffraction,
- le détachement de la feuille maître (1) de la forme (6) autoporteuse.

2. Procédé selon la revendication 1, **caractérisé en ce que** l'étape de la fourniture de la feuille maître (1) s'effectue par découpage de la feuille maître (1) à partir d'une feuille plus grande, en utilisant un laser.

3. Procédé selon la revendication 1 ou 2, **caractérisé en ce que** l'étape de formage de la surface s'effectue dans un processus galvanique.

4. Procédé selon la revendication 3, **caractérisé en ce que** la forme (6) est enfilée, en tant que manchon d'estampage, sur un cylindre de serrage (7), pour former un cylindre d'estampage (8).

5. Procédé selon au moins l'une des revendications 1 à 4, **caractérisé en ce que** l'étape de détachement de la feuille maître (1) de la forme (6) s'effectue par pelage de la feuille maître (1) de la forme (6).

6. Procédé selon au moins l'une des revendications 1 à 5, **caractérisé en ce que** la surface de la feuille maître (1) est munie d'un moyen de séparation avant l'étape de formage.

7. Procédé selon la revendication 1 ou 2, **caractérisé en ce que** le formage s'effectue dans une matière plastique.

8. Procédé selon la revendication 7, **caractérisé en ce que** la forme en plastique est métallisée après le détachement de la feuille maître.
